# FASCICULE DE BREVET EUROPEEN

(11) **EP 1 399 683 B1**
(45) Date de publication et mention de la délivrance du brevet: **01.12.2004**
(21) Numéro de dépôt: 02755094.6
(22) Date de dépôt: 26.06.2002
(51) Int. Cl.: F16H 19/00

(54) **ACTIONNEUR LINEAIRE A COURROIE**
LINEARANTRIEB FÜR EIN ZUG- ODER SCHUBBAND
LINEAR BELT ACTUATOR

(30) Priorité: 26.06.2001 FR 0108393
(43) Date de publication de la demande: 24.03.2004
(73) Titulaire: Serapid France, 76660 Londinieres (FR)
(72) Inventeur: BOURC'HIS, Joel, F-76200 Dieppe (FR)
(74) Mandataire: Cabinet HERRBURGER
(86) Numéro de dépôt international: PCT/FR2002/002211
(87) Numéro de publication internationale: WO 2003/002892

(56) Documents cités:
- EP-A- 0 799 788
- WO-A-98/46903
- US-A- 4 726 247
- PATENT ABSTRACTS OF JAPAN vol. 001, no. 096 (M-033), 30 août 1977 (1977-08-30) & JP 52 037668 A (HIROZUMI MASAO), 23 mars 1977 (1977-03-23)

## Description

La présente invention concerne un actionneur linéaire susceptible de transmettre des efforts de traction et également de poussée en se comportant alors comme une barre rigide en une seule pièce, comme révélé dans WO 9846903 A et conformément au préambule de la revendication 1.

On a déjà proposé des chaînes de poussée aptes à remplir cette fonction. De telles chaînes de poussée ont à titre d'exemple déjà été décrites dans les documents FR-1 297 285 ou FR-2 061 884.

Celles-ci sont classiquement constituées par une succession de maillons articulés les uns sur les autres au moyen d'axes dirigés transversalement.

Chaque maillon comporte deux joues essentiellement parallèles respectivement percées de deux trous de réception des axes d'articulation et équipées, chacune, d'un prolongement définissant une face active transversale avant et une face active transversale arrière appelées à prendre appui, respectivement, contre les faces actives transversales arrière et avant des joues des maillons voisins lorsque le tronçon de chaîne dont font partie les maillons considérés s'étend suivant une ligne droite.

De telles chaînes de poussée sont entraînées, au niveau d'une extrémité courbe par un dispositif comportant un carter, un pignon rotatif d'axe parallèle aux axes d'articulation des maillons, monté dans le carter et sur lequel s'enroule la chaîne, ainsi que des galets de roulement montés fous et destinés au guidage des maillons de la chaîne autour du pignon rotatif.

De telles chaînes de poussées sont capables de transmettre de manière satisfaisante des efforts de traction et de poussée dans un sens quelconque, y compris en élévation, mais ont une configuration essentiellement sophistiquée.

De plus, ces chaînes de poussée ne sont adaptées qu'à l'actionnement de pièces mécaniques « lourdes » et on n'a jusqu'à présent jamais proposé de dispositif similaire conçu pour permettre d'effectuer des changements de direction dans des petits automatismes.

La présente invention a pour objet de combler cette lacune en proposant un actionneur linéaire du type susmentionné caractérisé en ce qu'il comporte deux courroies d'actionnement identiques crantées sur chacune de leurs faces et munies sur une première de celles-ci de plots régulièrement espacés qui engrènent au moyen d'organes de commande, de sorte que les deux courroies d'actionnement soient indépendantes en amont des organes de commande alors qu'en aval de ces organes elles sont rassemblées solidairement de manière à définir un tronçon s'étendant selon une ligne droite dans lequel l'actionneur linéaire se comporte comme une barre rigide en une seule pièce.

Ces courroies d'actionnement sont de préférence réalisées en un matériau plastique souple renforcé et correspondent donc à des éléments simples et économiques présentant en outre l'avantage de pouvoir être fabriqués par moulage en une seule pièce.

Selon une caractéristique préférentielle de l'invention, les organes de commande sont constitués par un carter renfermant deux pignons rotatifs à savoir un pignon moteur et un pignon entraîné qui viennent en prise l'un dans l'autre en entraînant deux bandes sans fin de type chenilles respectivement montées de part et d'autre des courroies d'actionnement, et équipées sur leur face externe de crans coopérant avec les crans situés sur la seconde face de ces courroies en s'imbriquant dans ces crans de façon à entraîner celles ci en translation en les comprimant l'une contre l'autre de sorte que leurs plots situés en regard viennent en prise les uns dans les autres.

Selon l'invention le carter des organes de commande renferme également des surfaces de guidage des courroies d'actionnement conçues pour permettre de les cintrer au niveau des bandes sans fin de type chenilles pour les amener en regard l'une de l'autre de sorte que leurs plots respectifs puissent venir en prise les uns dans les autres.

Selon une autre caractéristique de l'invention, les plots des courroies d'actionnement comportent deux faces frontales ainsi qu'une face active transversale avant et une face active transversale arrière présentant chacune une double courbure.

Les faces actives transversales avant et arrière d'un plot de l'une des courroies d'actionnement sont respectivement appelées à prendre appui contre les faces actives transversales arrière et avant respectives de deux plots voisins associés de l'autre courroie d'actionnement lorsque les deux courroies d'actionnement sont rassemblées solidairement.

Il est essentiel, pour que l'actionneur linéaire conforme à l'invention puisse remplir sa fonction que le tronçon linéaire défini par les deux courroies d'actionnement lorsqu'elles sont rassemblées solidairement ne comporte pas de « vides » et donc que la géométrie de ces courroies d'actionnement soit telle que la forme et les dimensions de l'espace compris entre les plots soient identiques à celles des plots.

Selon une autre caractéristique de l'invention, les faces actives transversales avant et arrière des plots comportent un double épaulement formant butée.

Ces épaulements permettent d'empêcher tout glissement transversal des plots voisins les uns par rapport aux autres lorsque les deux courroies d'actionnement sont rassemblées solidairement.

Selon une autre caractéristique de l'invention, les faces actives transversales avant et arrière des plots sont séparées par une face longitudinale crantée essentiellement rectiligne.

Les crans de la face longitudinale d'un plot de l'une des courroies sont appelés à coopérer avec des crans correspondants du segment de la première face de l'autre courroie situé entre les deux plots associés à ce plot, en s'imbriquant dans ces crans lorsque les deux courroies d'actionnement sont rassemblées solidairement.

En conséquence, dans cette position, les premières faces situées en regard des deux courroies d'actionnement sont intimement en prise sur la totalité de leur longueur.

Selon une autre caractéristique de l'invention, les deux pignons rotatifs se prolongent coaxialement par un embout denté de diamètre inférieur coopérant respectivement avec une roue dentée auxiliaire de même diamètre, montée folle, de façon à entraîner les bandes sans fin de type chenilles.

Selon l'invention, le carter les organes de commande peut également avantageusement renfermer au moins un couple de galets de positionnement d'axes essentiellement perpendiculaires à l'axe des pignons rotatifs et venant en prise de part et d'autre d'un tronçon linéaire de l'actionneur défini par les deux courroies d'actionnement rassemblées solidairement, contre les faces frontales des plots de ces courroies.

Les caractéristiques de l'actionneur linéaire qui fait l'objet de l'invention seront décrites plus en détail en se référant aux dessins annexés dans lesquels :
- la figure 1 est un schéma représentant l'actionneur linéaire dans lequel la partie supérieure du carter des organes de commande a été enlevé,
- la figure 2 représente les deux courroies d'actionnement,
- la figure 2a est une coupe de la figure 2 selon un plan schématisé par l'axe II-II,
- la figure 3 représente un détail des deux courroies d'actionnement,
- la figure 4 est un schéma représentant les organes de commande dans lequel la partie supérieure du carter de ces organes a été enlevée,
- la figure 5 est une coupe de la figure 4 selon un plan schématisé par l'axe V-V, les courroies d'actionnement étant positionnées dans les organes de commande,
- la figure 6 est une coupe de la figure 4 selon un plan schématisé par l'axe VI-VI, les courroies d'actionnement étant positionnées dans les organes de commande.

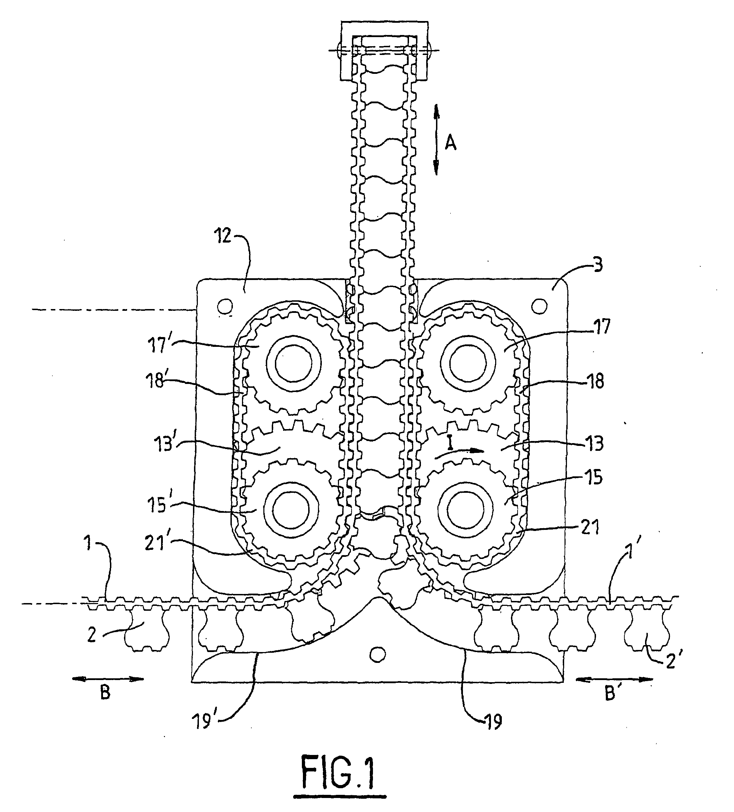

Selon la figure 1, l'actionneur linéaire comporte deux courroies d'actionnement identiques 1, 1' ainsi que des organes de commande 3 qui entraînent ces courroies d'actionnement 1, l'en translation dans un sens ou dans un autre, selon les doubles flèches A, B et B'.

Sur la partie inférieure de la figure 1, c'est-à-dire en amont des organes de commande 3, les deux courroies d'actionnement 1, 1' sont indépendantes l'une de l'autre, alors que sur la partie supérieure de la figure 1 c'est-à-dire en aval des organes de commande 3 ces deux courroies 1, 1' sont rassemblées solidairement de façon à définir un tronçon s'étendant selon une ligne droite dans lequel l'actionneur linéaire se comporte comme une barre rigide en une seule pièce.

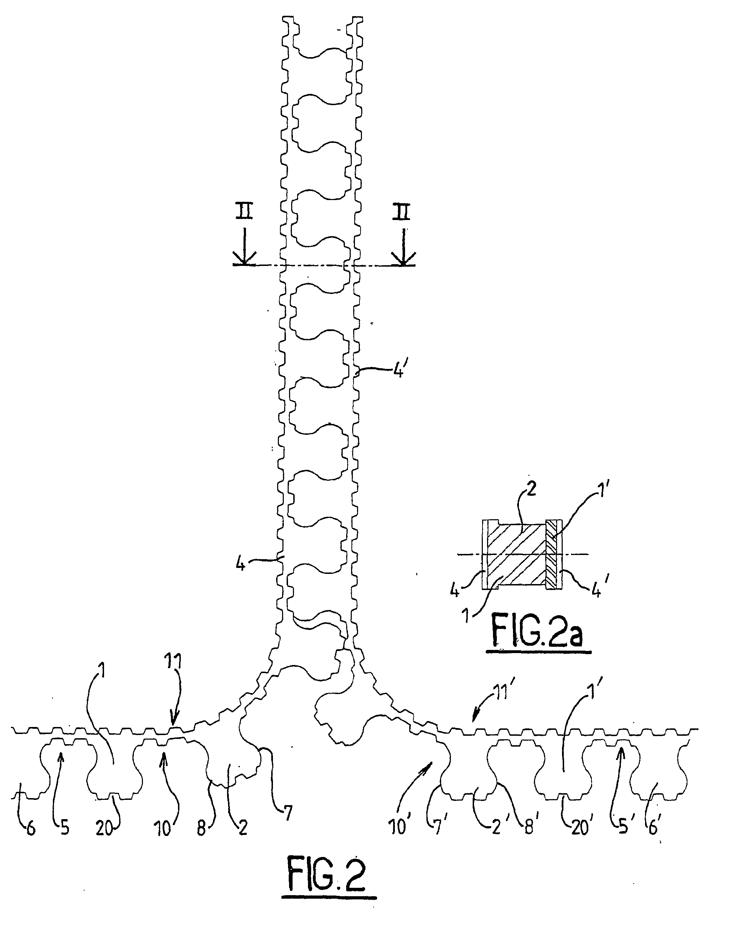

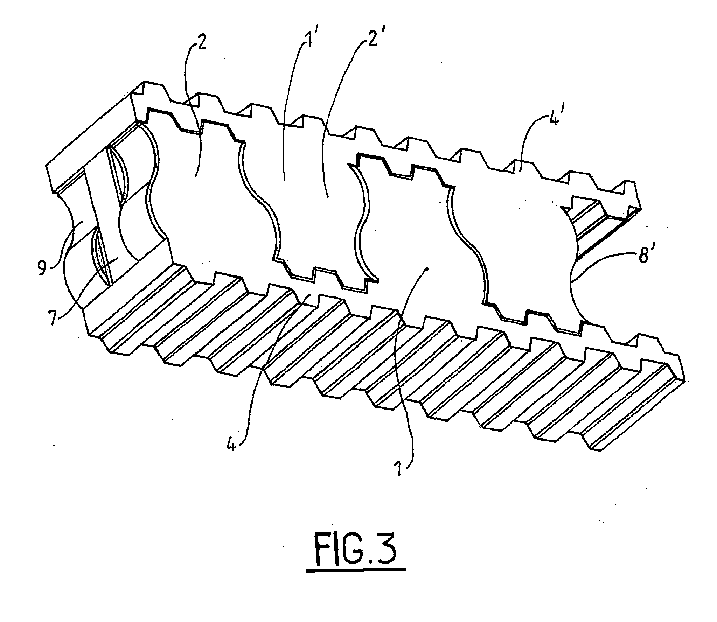

Selon les figures 2, 2a et 3 les courroies d'actionnement 1, 1' sont munies sur chacune de leurs faces 10, 11 et 10', 11' de crans identiques 4, 4' qui sont respectivement appelés à s'imbriquer dans des crans associés d'une manière qui sera décrite plus en détail dans la suite de cet exposé.

Une première face 10, 10' des courroies d'actionnement 1, l'est également équipée de plots 2, 2' régulièrement espacés qui sont séparés par des segments crantés 5, 5'.

Les plots 2, 2' comportent chacun deux faces frontales 6, 6' ainsi qu'une face active transversale avant 7, 7' et une face active transversale arrière 8, 8' présentant une double courbure.

Les faces actives transversales avant et arrière 7, 7', 8, 8' des plots 2, 2' sont séparées par une face longitudinale crantée 20, 20' essentiellement rectiligne.

Comme on peut s'en rendre compte en particulier sur la figure 3, les courroies d'actionnement 1, 1' ont une géométrie conçue de sorte que la forme et les dimensions de l'espace compris entre les plots 2, 2' soient identiques à celles de ces plots.

Selon la figure 3, les faces actives transversales avant et arrière 7, 7', 8, 8', des plots 2, 2' comportent par ailleurs un double épaulement 9 formant butée dont la fonction sera également précisée dans la suite de cet exposé.

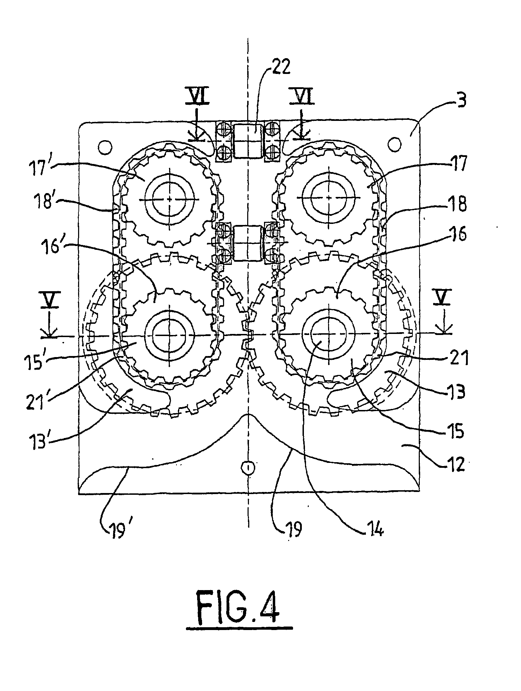

Selon les figures 4, 5 et 6, les organes de commande 3 comportent un carter 12 renfermant deux pignons rotatifs 13, 13' de même diamètre et d'axe X-X' qui viennent en prise l'un dans l'autre.

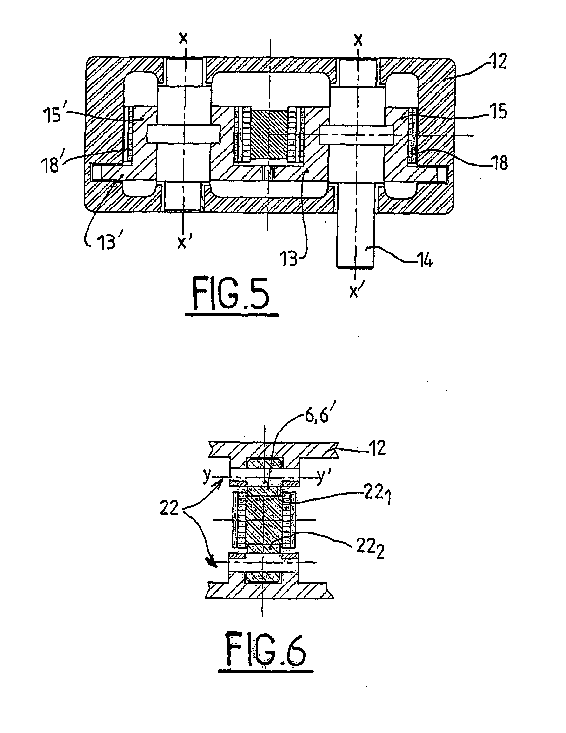

Selon la figure 5, l'un de ces pignons 13 est moteur et est relié à un moteur non représenté par un axe d'entraînement 14 faisant saillie hors du carter 12 tandis que le second pignon rotatif 13' est un pignon entraîné.

Selon les figures 4 et 5, les pignons rotatifs 13, 13' se prolongent coaxialement par un embout 15, 15' équipé de dents 16, 16' ayant un diamètre inférieur.

Selon la figure 4, les embouts dentés 15, 15' coopèrent respectivement avec deux roues dentées auxiliaires 17, 17' de même diamètre et d'axes parallèles qui sont montées folles.

Les pignons rotatifs 13, 13' équipées des embouts dentés 15, 15' et les roues dentées auxiliaires 17, 17' entraînent ainsi en rotation deux bandes sans fin de type chenilles 18, 18' dont la face interne est à cet effet équipée de crans correspondant aux dents des embouts 15, 15' et des roues auxiliaires 17, 17'.

Ces deux bandes sans fin 18, 18' sont appelées à prendre en sandwich les deux courroies d'actionnement 1,1' pour les guider et les entraîner en translation dans un sens ou dans un autre selon le sens de rotation du pignon moteur 13.

Dans ce but, la face externe de ces deux bandes sans fin de type chenilles 18, 18' est elle aussi munie de crans 21, 21' susceptibles de venir en prise avec les crans 4, 4' situés sur la seconde face 11, 11' des deux courroies d'actionnement 1, 1' pour déplacer celles ci en translation selon les flèches A, B et B'.

Selon les figures 1 et 4 le carter 12 des organes de commande 3 renferme par ailleurs des surfaces de guidage 19, 19' des deux courroies d'actionnement 1,1' qui coopèrent avec les faces longitudinales 20, 20' des plots 2, 2' de celles ci pour les transférer entre les bandes sans fin de type chenilles 18, 18' ou les en dégager ce, en les cintrant.

Selon la figure 1, au cours de ce transfert, lorsque le pignon moteur 13 tourne dans le sens des aiguilles d'une montre I Les plots 2, 2' des deux courroies d'actionnement 1, 1' pénètrent indépendamment dans le carter 12 au niveau de ses bords latéraux, de part et d'autre de celui-ci, puis sont respectivement guidés en translation à sa partie interne le long des surfaces de guidage 19, 19' au niveau desquelles ils sont soumis à un cintrage de sorte qu'ils soient situés en regard avant de pénétrer entre les deux bandes sans fin de type chenilles 18, 18'.

Au niveau de ces bandes, les courroies d'actionnement 1, 1' sont comprimées l'une contre l'autre de sorte que les plots 2, 2' engrènent les uns dans les autres et que les deux courroies 1, 1' soient rassemblées solidairement en un tronçon s'étendant selon une ligne droite.

A cet effet, les faces actives transversales avant et arrière 7, 7', 8, 8' des plots 2, 2' de l'une des courroies d'actionnement 1, 1' prennent respectivement appui contre les faces actives transversales arrière et avant 8', 8, 7', 7 respectives de deux plots voisins 2', 2 associés de l'autre courroie d'actionnement 1', 1 et les crans 4, 4' de la face longitudinale 20, 20' des plots 2, 2' de l'une des courroies d'actionnement 1, 1' viennent respectivement en prise dans les crans correspondants du segment 5', 5 respectif de l'autre courroie d'actionnement 1', 1 séparant les deux plots voisins associés 2', 2, de sorte que ces deux courroies d'actionnement soient parfaitement imbriquées l'une dans l'autre pour définir une barre rigide en une seule pièce.

Dans cette position les doubles épaulements formant butées 9 prévus sur les faces actives transversales 7, 7' ; 8, 8' empêchent tout glissement transversal des plots 2, 2' voisins les uns par rapport aux autres.

Bien entendu, lorsque le pignon moteur 13 tourne dans le sens inverse des aiguilles d'une montre, le déplacement des plots 2, 2' des deux courroies d'actionnement 1, 1' s'effectue en sens inverse c'est-à-dire que ces plots pénètrent dans le carter 12 en étant imbriqués les uns dans les autres et se désolidarisent au niveau des deux bandes sans fin de type chenilles 18, 18'.

Par ailleurs et selon les figures 4 et 6, le carter 12 renferme également deux couples de galets de positionnement 22.

Chacun de ces couples est constitué par l'association de deux galets de positionnement 22₁, 22₂, d'axe Y-Y' perpendiculaire à l'axe X-X' des pignons rotatifs 13, 13'.

Ces galets de positionnement 22₁, 22₂ viennent en prise contre les faces frontales 6, 6' des plots 2, 2' pour garantir le positionnement correct des courroies d'actionnement 1, 1' lorsqu'elles sont imbriquées l'une dans l'autre.

## Revendications

1. Actionneur linéaire susceptible de transmettre des efforts de traction et également de poussée et comportant d'une part deux courroies d'actionnement identiques (1, 1') réalisées en une matière plastique souple, le cas échéant renforcée, et munies sur l'une de leurs faces ou face intérieure (10, 10') de plots (2, 2') régulièrement espacés, séparés par des segments (5, 5') et comportant chacun deux faces frontales (6, 6') ainsi qu'une face active transversale avant (7, 7') et une face active transversale arrière (8, 8') séparées par une face longitudinale (20, 20') essentiellement rectiligne, et d'autre part des organes de commande (3) coopérant avec des crans (4, 4') situés sur l'autre face ou face intérieure (11, 11') des courroies d'actionnement (1, 1') pour entraîner celles-ci en translation, de sorte qu'elles soient indépendantes en amont de ces organes (3) alors qu'en aval de ceux-ci les plots (2, 2') équipant les faces intérieures (10, 10') respectives des deux courroies d'actionnement (1, 1') qui sont situés en regard engrênent les uns dans les autres, et les faces actives transversales avant et arriêre (7, 7' ; 8, 8') d'un plot (2, 2') de l'une des courroies d'actionnement (1, 1') prennent respectivement appui contre les faces transversales arrière et avant (8', 8 ; 7', 7) respectives de deux plots voisins (2', 2) associés de l'autre courroie d'actionnement (1', 1), en définissant un tronçon s'étendant selon une ligne droite dans lequel les deux courroies d'actionnement (1, 1') sont rassemblées solitairement, et
- la forme et les dimensions de l'espace compris entre les plots (2, 2') des courroies d'actionnement (1, 1') sont identiques à celles des plots de sorte que le tronçon linéaire défini par ces courroies (2, 2') lorsqu'elles sont rassemblèes solidairement ne comporte pas de vides, et
**caractérisé en ce que**
- les segments (5, 5') des faces intérieures (10, 10') respectives des deux courroies d'actionnement (1, 1') séparant les plots (2, 2'), ainsi que les faces longitudinales (20, 20') de ces plots (2, 2') sont munies de crans (4, 4'), les crans (4, 4') de la face longitudinale (20, 20') d'un plot (2, 2') de l'une des courroies (1, 1') coopérant avec des crans (4', 4) correspondants du segment (5', 5) de la face intérieure (10', 10) de l'autre courroie (1', 1) située entre les deux plots (2', 2) associés à ce plot (2, 2') en s'imbriquant dans ces crans lorsque les deux courroies d'actionnement (1, 1') sont rassemblées solidairement, de sorte que l'actionneur linéaire se comporte comme une barre rigide en une seule pièce.

2. Actionneur linéaire selon la revendication 1,
**caractérisé en ce que**
les crans (4, 4') situés sur les faces extérieures (11, 11') respectives des deux courroies d'actionnement (1, 1') d'une part et sur les faces longitudinales (20, 20') respectives des plots (2, 2') et les segments (5, 5') des faces intérieures (10, 10') respectives des deux courroies d'actionnement (1, 1') séparant ces plots d'autre part, sont identiques.

3. Actionneur linéaire selon l'une quelconque des revendications 1 et 2,
**caractérisé en ce que**
les faces actives transversales avant (7, 7') et les faces actives transversales arrières (8, 8') respectives des plots (2, 2') des courroies d'entraînement (1, 1') présentent chacune une double courbure.

4. Actionneur linéaire selon l'une quelconque des revendications 1 à 3,
**caractérisé en ce que**
les faces actives transversales avant et arrière (7, 7' ; 8, 8') des plots (2, 2') comportent un double épaulement (9) formant butée de façon à permettre d'empêcher tout glissement transversal des plots (2, 2') voisins les uns par rapport aux autres lorsque les deux courroies d'actionnement (1, 1') sont rassemblées solidairement.

5. Actionneur linéaire selon l'une quelconques des revendications 1 à 4,
**caractérisé en ce que**
les organes de commande (3) sont constitués par un carter (12) renfermant deux pignons rotatifs, à savoir un pignon moteur (13) et un pignon entraîné (13') qui viennent en prise l'un dans l'autre en entraînant deux bandes sans fin de type chenilles (18, 18') respectivement montées de part et d'autre des courroies d'actionnement (1, 1') et équipées sur leur face externe de crans (21, 21') coopérant avec les crans (4, 4') situés sur la face extérieure (11, 11') de ces courroies (1, 1') en s'imbriquant dans ces crans de façon à entraîner celles-ci en translation en les comprimant l'une contre l'autre de sorte que leurs plots (2, 2') situés en regard viennent en prise les uns dans les autres.

6. Actionneur linéaire selon la revendication 5,
**caractérisé en ce que**
les deux pignons rotatifs (13, 13') se prolongent coaxialement par un embout denté (15, 15') de diamètre inférieur coopérant respectivement avec une roue dentêe auxiliaire (17, 17') de même diamètre, montée folle, de façon à entraîner les bandes sans fin de type chenilles (18, 18').

7. Actionneur linéaire selon l'une quelconque des revendications 5 et 6,
**caractérisé en ce que**
le carter (12) des organes de commande (3) renferme au moins un couple de galets de positionnement (22) d'axe Y-Y' essentiellement perpendiculaire à l'axe X-X' des pignons rotatifs (13, 13') et venant en prise de part et d'autre d'un tronçon linéaire de l'actionneur défini par les deux courroies d'actionnement (1, 1') rassemblées solidairement, contre les faces frontales (6, 6') des plots (2, 2') de ces courroies (1, 1').

## Patentansprüche

1. Linearantrieb zur Übertragung von Zug- und Druckkräften, der einerseits zwei identische Betätigungsriemen (1, 1'), die aus einem gegebenenfalls verstärkten, weichen Kunststoffmaterial hergestellt sind und auf einer ihrer Seiten oder der Innenseite (10, 10') mit gleichmäßig beabstandeten Nocken (2, 2') versehen sind, die durch Segmente (5, 5') getrennt sind und jeweils zwei Frontseiten (6, 6') sowie eine aktive vordere Querseite (7, 7') und eine aktive hintere Querseite (8, 8') aufweisen, welche durch eine im Wesentlichen geradlinige Längsseite (20, 20') getrennt sind, und andererseits Betätigungsglieder (3) aufweist, die mit sich auf der anderen Seite oder Innenseite (11, 11') der Betätigungsriemen (1, 1') befindenden Verzahnungen (4, 4') zusammenwirken, um diese translatorisch anzutreiben, so dass sie stromaufwärts dieser Glieder (3) unabhängig sind, während sie stromabwärts dieser an der jeweiligen Innenseite (10, 10') der beiden Betätigungsriemen (1, 1') vorgesehenen Nocken (2, 2'), die einander gegenüberliegen, ineinander eingreifen, und die aktiven vorderen und hinteren Querseiten (7, 7'; 8, 8' ) eines Nockens (2, 2' ) eines der Betätigungsriemen (1, 1') sich jeweils an den jeweiligen vorderen und hinteren Querseiten (8', 8; 7', 7) zweier benachbarter Nocken (2', 2), die dem anderen Betätigungsriemen (1', 1) zugeordnet sind, abstützen, wobei ein sich entlang einer Geraden erstreckender Abschnitt definiert wird, in dem die beiden Betätigungsriemen (1, 1') integral zusammengefügt sind,
- wobei die Form und die Abmessungen des Raums zwischen den Nocken (2, 2' ) der Betätigungsriemen (1, 1') identisch mit denen der Nocken sind, so dass der durch diese Riemen (1, 1') definierte lineare Abschnitt, nach ihrem integralen Zusammenfügen, keine Leerräume aufweist,
**dadurch gekennzeichnet, dass**
- die Segmente (5, 5') der jeweiligen Innenseiten (10, 10') der beiden Betätigungsriemen (1, 1') die Nocken (2, 2') trennen, und die Längsseiten (20, 20') dieser Nocken (2, 2' ) mit Verzahnungen (4, 4') versehen sind, wobei die Verzahnungen (4, 4') der Längsseite (20, 20') eines Nockens (2, 2') eines der Riemen (1, 1') mit entsprechenden Verzahnungen (4', 4) des Segments (5', 5) der Innenseite (10', 10) des anderen Riemens (1', 1), das sich zwischen den beiden diesem Nocken (2, 2') zugeordneten Nocken (2', 2) befindet, zusammenwirken, indem sie in diese Verzahnungen eingreifen, wenn die beiden Betätigungsriemen (1, 1') integral zusammengefügt sind, so dass sich der Linearantrieb wie ein einstückiger starrer Stab verhält.

2. Linearantrieb nach Anspruch 1,
**dadurch gekennzeichnet, dass**
die sich einerseits an den jeweiligen Außenseiten (11, 11') der beiden Betätigungsriemen (1, 1') und andererseits an den jeweiligen Längsseiten (20, 20') der Nocken (2, 2') und der Segmente (5, 5') der jeweiligen Innenseiten (10, 10') der beiden Betätigungsriemen (1, 1'), die diese Nocken trennen, befindenden Verzahnungen (4, 4') identisch sind.

3. Linearantrieb nach Anspruch 1 oder 2,
**dadurch gekennzeichnet, dass**
einerseits die jeweiligen vorderen aktiven Querseiten (7, 7' ) und hinteren aktiven Querseiten (8, 8') der Nocken (2, 2') der Betätigungsriemen (1, 1') jeweils eine doppelte Krümmung aufweisen.

4. Linearantrieb nach einem der Ansprüche 1 bis 3,
**dadurch gekennzeichnet, dass**
die vorderen und hinteren aktiven Querseiten (7, 7' ; 8, 8' ) der Nocken (2, 2' ) eine doppelte Schulter (9) aufweisen, die einen Anschlag bildet, so dass jegliches Gleiten der benachbarten Nocken (2, 2') in Querrichtung bezüglich einander verhindert wird, wenn die beiden Betätigungsriemen (1, 1') integral zusammengefügt sind.

5. Linearantrieb nach einem der Ansprüche 1 bis 4,
**dadurch gekennzeichnet, dass**
die Betätigungsglieder (3) aus einem zwei Drehritzel, nämlich ein Antriebsritzel (13) und ein angetriebenes Ritzel (13'), einschließenden Gehäuse (12) bestehen, wobei die Ritzel miteinander in Eingriff kommen und dabei zwei Endlosraupenbänder (18, 18') antreiben, welche jeweils auf beiden Seiten der Betätigungsriemen (1, 1') angebracht und auf ihrer Außenseite mit Verzahnungen (21, 21') versehen sind, die mit den sich an der Außenseite (11, 11') dieser Riemen (1, 1') befindenden Verzahnungen (4, 4') zusammenwirken, indem sie in diese Verzahnungen eingreifen, um diese translatorisch anzutreiben, indem sie sie gegeneinander drücken, so dass ihre einander gegenüber befindlichen Nocken (2, 2') in Eingriff miteinander gelangen.

6. Linearantrieb nach Anspruch 5,
**dadurch gekennzeichnet, dass**
sich die beiden Drehritzel (13, 13') durch ein Zahnendstück (15, 15') mit kleinerem Durchmesser koaxial verlängern, das jeweils mit einem beweglich montierten Zusatzzahnrad (17, 17') gleichen Durchmessers zusammenwirkt, um die Endlosraupenbänder (18, 18') anzutreiben.

7. Linearantrieb nach Anspruch 5 oder 6,
**dadurch gekennzeichnet, dass**
das Gehäuse (12) der Betätigungsglieder (3) mindestens ein Positionierrollenpaar (22) mit einer Achse Y-Y', die im Wesentlichen senkrecht zur Achse X-X' der Drehritzel (13, 13') verläuft, einschließt, das auf beiden Seiten eines durch die beiden integral zusammengefügten Betätigungsriemen (1, 1') definierten linearen Abschnitts des Antriebs an die Frontseiten (6, 6') der Nocken (2, 2') dieser Riemen (1, 1') angreift.

## Claims

1. Linear actuator able to transmit traction and thrust forces and comprising firstly two identical actuator belts (1, 1') made of a flexible plastic material, where applicable reinforced, and fitted on one of their faces or on the inner face (10, 10') with regularly spaced studs (2, 2') separated by segments (5, 5') and each comprising two front faces (6, 6') and an active front transverse face (7, 7') and an active rear transverse face (8, 8') separated by an essentially rectilinear longitudinal face (20, 20'), and secondly control elements (3) co-operating with catches (4, 4') situated on the other or inner face (11, 11') of the actuator belts (1, 1') to drive these in translation, such that they are independent upstream of these elements (3) whereas downstream thereof the studs (2, 2') fitted to the respective inner faces (10, 10') of the two actuator belts (1, 1') are situated facing and intermeshing with each other, and the active front and rear transverse faces (7, 7'; 8, 8') of a stud (2, 2') of one of the actuator belts (1, 1') come to rest respectively against the respective rear and front transverse faces (8, 8'; 7, 7') of two adjacent studs (2', 2) attached to the other actuator belt (1', 1), defining a section extending along a straight line in which the two actuator belts (1, 1') are joined together, and
- the form and dimensions of the space between the studs (2, 2') of the actuator belts (1, 1') are identical to those of the studs such that the linear section defined by these belts (2, 2') when joined together comprise no voids, and **characterised in that**
- the segments (5, 5') of the respective inner faces (10, 10') of the two actuator belts (1, 1') separating the studs (2, 2') and the longitudinal faces (20, 20') of these studs (2, 2') are fitted with catches (4, 4'), the catches (4, 4') of the longitudinal face (20, 20') of a stud (2, 2') of one of the belts (1, 1') co-operating with the corresponding catches (4, 4') of the segment (5', 5) of the inner face (10', 10) of the other belt (1', 1) situated between the two studs (2', 2) associated with this stud (2, 2'), by intermeshing in these catches when the two actuator belts (1, 1') are joined together such that the linear actuator behaves as a rigid bar in a single piece.

2. Linear actuator according to claim 1,
**characterised in that**
the catches (4, 4') firstly on the respective outer faces (11, 11') of the two actuator belts (1, 1') and secondly on the respective longitudinal faces (20, 20') of the studs (2, 2') and segments (5, 5') of the respective inner faces (10, 10') of the two actuator belts (1, 1') separating these studs, are identical.

3. Linear actuator according to one of claims 1 and 2,
**characterised in that**
the active front transverse faces (7, 7') and the respective active rear transverse faces (8, 8') of the studs (2, 2') of the drive belts (1, 1') each have a double curvature.

4. Linear actuator according to any of claims 1 to 3,
**characterised in that**
the active front and rear transverse faces (7, 7'; 8, 8') of the studs (2, 2') comprise a double shoulder (9) forming a stop so as to prevent any transverse slippage of adjacent studs (2, 2') in relation to each other when the two actuator belts (1, 1') are joined together.

5. Linear actuator according to any of claims 1 to 4,
**characterised in that**
the control elements (3) comprise a housing (12) containing rotating pinions, namely a motor pinion (13) and a driven pinion (13') which come into mutual engagement driving two endless track-type belts (18, 18') mounted respectively on either side of the actuator belt (1, 1') and fitted on their outer face with catches (21, 21') co-operating with the catches (4, 4') on the outer face (11, 11') of these belts (1, 1') by intermeshing with these catches so as to drive these in translation by compressing them one against the other such that their opposing studs (2, 2') come to intermesh.

6. Linear actuator according to claim 5,
**characterised in that**
the two rotating pinions (13, 13') are extended coaxially by a toothed connector (15, 15') of smaller diameter co-operating respectively with an auxiliary toothed wheel (17, 17') of the same diameter, mounted loose so as to drive the endless track-type belts (18, 18').

7. Linear actuator according to any of claims 5 and 6,
**characterised in that**
the housing (12) of the control elements (3) comprises at least one pair of positioning rollers (22) of axis Y-Y' essentially perpendicular to axis X-X' of the rotating pinions (13, 13') and coming to engage on either side of a linear section of the actuator defined by the two joined together actuator belts (1, 1') against the front faces (6, 6') of the studs (2, 2') of these belts (1, 1').
